# EUROPÄISCHE PATENTSCHRIFT

(11) **EP 1 519 852 B1**
(45) Veröffentlichungstag und Bekanntmachung des Hinweises auf die Patenterteilung: **05.03.2008**
(21) Anmeldenummer: 03740414.2
(22) Anmeldetag: 04.07.2003
(51) Int. Cl.: B60W 10/02

(54) **VERFAHREN UND VORRICHTUNG ZUR STEUERUNG VON FUNKTIONEN EINES ARBEITSFAHRZEUGES**
METHOD AND DEVICE FOR CONTROLLING FUNCTIONS OF AN OCCUPATIONAL VEHICLE
PROCEDE ET DISPOSITIF POUR COMMANDER DES FONCTIONS D'UN VEHICULE DE TRAVAIL

(30) Priorität: 10.07.2002 DE 10230993
(43) Veröffentlichungstag der Anmeldung: 06.04.2005
(73) Patentinhaber: ZF FRIEDRICHSHAFEN Aktiengesellschaft, 88038 Friedrichshafen (DE)
(72) Erfinder: HÖFLER, Hans, 88090 Immenstaad (DE)
(86) Internationale Anmeldenummer: PCT/EP2003/007161
(87) Internationale Veröffentlichungsnummer: WO 2004/007234

(56) Entgegenhaltungen:
- EP-A- 0 582 816
- EP-A- 1 093 986
- DE-A- 3 606 418
- DE-A- 4 112 503
- DE-A- 4 307 002
- DE-A- 19 941 876

## Beschreibung

Die Erfindung betrifft ein Verfahren und eine Vorrichtung zum Steuern von Funktionen eines Arbeitsfahrzeuges gemäß dem Oberbegriff der Ansprüche 1 und 10.

Zu derartigen Arbeitsfahrzeugen gehören beispielsweise Radlader oder Gabelstapler, bei denen ein Fahrzeugmotor in der Regel über einen hydrodynamischen Drehmomentwandler und einem diesem nachgeordneten Getriebe für den Antrieb des Fahrzeuges sorgt. Zudem treibt bei solchen Fahrzeugen der Antriebsmotor zumindest eine Hydraulikpumpe an, mit der Haupt- oder Nebenkomponenten des Fahrzeugs mit Betätigungs- und/oder Steuerdruck versorgt werden. Zu den in diesem Sinne typischen Hauptkomponenten des Arbeitsfahrzeugs gehören hydraulisch betätigbare Kolben-Zylinder-Anordnungen, mit denen beispielsweise bei einem Radlader die Ladeschaufel oder bei einem Gabelstapler die Hubgabel bewegt werden kann. Zu den nicht weniger wichtigen Nebenkomponenten kann beispielsweise eine Servolenkung, eine hydraulische Kupplungsbetätigungsvorrichtung und ein hydraulisches Bremssystem gehören.

Bei solchen Fahrzeugen ist es allgemein bekannt, für jede der wichtigsten Haupt- und Nebenkomponenten eine Hydraulikpumpe vorzusehen, um so unabhängig voneinander jede dieser Komponenten jederzeit mit dem notwendigen Hydraulikdruck zu versorgen. Diese Hydraulikkonzepte sind zwar steuerungstechnisch sehr einfach aufgebaut, in anderer Hinsicht aber dennoch unvorteilhaft, da diese vielen Pumpen viel Bauraum in dem Fahrzeug benötigen, die Herstellkosten erhöhen und wegen ihres ständigen Betriebes für einen schlechten Wirkungsgrad des Antriebssystems sorgen.

Vor diesem Hintergrund wurde durch die DE 197 42 187 A1 vorgeschlagen, zur Versorgung des Fahrantriebs, der Arbeitshydraulik sowie der Lenkung eine im offenen Kreislauf arbeitende hydraulische Pumpe mit verstellbarem Fördervolumen vorzusehen, so dass anstelle mehrerer Pumpen nur eine einzige Pumpe für die Versorgung der Haupt- und Nebenkomponenten vorgesehen ist. Aus dieser Druckschrift ist außerdem bekannt, dass die Pumpe an eine Förderleitung für das Hydraulikfluid angeschlossen ist, in der mindestens ein Fahrventil vorgesehen ist, wobei stromauf des Fahrventils in der Förderleitung der Pumpe ein Prioritätsventil für die Arbeitshydraulik vorhanden ist und stromauf dieses Arbeitsventils für die Arbeitshydraulik ein Prioritätsventil für die Lenkung angeordnet ist. Dadurch wird mit oberster Priorität die Lenkung mit ausreichend Druckmittel versorgt, während eben dieser Lenkung nachgeordnet die Arbeitshydraulik versorgt wird. Zudem wird sichergestellt, dass in Betriebszuständen, in denen beispielsweise der Fahrantrieb und die Arbeitshydraulik gleichzeitig betätigt werden, zuerst die Arbeitshydraulik mit Druckmittel versorgt wird und das von der Arbeitshydraulik nicht benötigte Druckmittel zur Versorgung des Fahrantriebs zur Verfügung steht.

Schließlich ist aus dieser Druckschrift bekannt, dass ein Feststellbremsventil an der genannten Druckmittelförderleitung oberhalb des Prioritätsventils für die Lenkung angeschlossen ist, wodurch die Feststellbremse jederzeit gelöst werden kann.

Andere Arbeitsfahrzeuge, insbesondere Radlader, verfügen über eine Steuerungsfunktion, durch die zu Beginn des Ladebetriebes beim Betätigen der auf die Fahrzeugräder wirkenden Betriebsbremse durch Abschalten des hydraulischen Betätigungsdrucks in einem hydraulisch betätigbaren Kupplungsstellmittel die Fahrkupplung geöffnet wird. Durch das Öffnen der Fahrkupplung steht sodann die Motorleistung fast vollständig der Fahrzeughydraulik für die Betätigung der Kolben-Zylinder-Anordnungen der Ladeschaufel zur Verfügung, so dass dadurch die Losreißkraft des Radladers erhöht werden kann. Dies ist vor allem dadurch bedingt, dass ohne diese Steuerungsfunktion bei zugeschaltetem Fahrantrieb und betätigter Fahrzeugbetriebsbremse eine sehr große Verlustleistung im Drehmomentwandler entsteht, da in diesem das Turbinenrad nahezu oder vollständig steht, während das durch den Antriebsmotor angetriebene Pumpenrad sich mit der sogenannten Festbremsdrehzahl dreht. Die Leistungsaufnahme des Drehmomentwandlers ist in dieser Betriebsart sehr hoch und wird, den Kraftstoffverbrauch unnötig erhöhend, weitgehend in Verlustwärme umgesetzt.

Die beschriebene Druckabschaltung wird bisher manuell durch den Fahrer durch Vorwahl der Steuerungsfunktion "Druckabschaltung in der Fahrkupplung" und dem Betätigen des Bremspedals ausgelößt. In der Regel steht dabei das Fahrzeug, da die Abschaltung des hydraulischen Schließdrucks im Betätigungsmittel der Fahrkupplung erst nach dem Schließen der Betriebsbremse erfolgt.

Diese manuelle Aktivierung der Druckabschaltung der Fahrkupplung durch den Fahrer ist sehr unkomfortabel, da dieser bei vorgewählter Funktion "Druckabschaltung in der Fahrkupplung" das Pedal der Betriebsbremse des Fahrzeuges betätigen muss. Dies fordert von dem Fahrer eine ständige Aufmerksamkeitsteilung zwischen den Anforderungen des Ladebetriebs und denen des Fahrbetriebs. Zudem ist wie beschrieben durch die bekannte manuelle Steuerungsfunktion der Kraftstoffverbrauch unnötig hoch.

Das Dokument EP-A-1 093 986 offenbart eine Vorrichtung nach dem Oberbegriff des Anspruchs 10 bzw. ein Verfahren zur Steuerung von Funktionen eines Arbeitsfahrzeuges.

Die Aufgabe an die Erfindung besteht daher darin, die Funktion der Druckabschaltung in der hydraulischen Stellvorrichtung der Fahrkupplung zur Entlastung der Aufmerksamkeit des Fahrers zu automatisieren und dabei Steuerungsfunktionen vorzusehen, mit denen der Kraftstoffverbrauch eines solchen Fahrzeuges reduzierbar ist.

Die Lösung dieser Aufgabe ergibt sich aus den verfahrensgemäßen Merkmalen des Hauptanspruchs, während der unabhängige Anspruch 10 die Merkmale einer erfindungsgemäßen Steuerungsvorrichtung angibt. Vorteilhafte Ausgestaltungen und Weiterbildungen der Erfindung sind den jeweiligen Unteransprüchen entnehmbar.

Demnach ist verfahrensgemäß vorgesehen, dass die Fahrkupplung automatisch dann geöffnet und die Betriebsbremse automatisch dann geschlossen wird, wenn die auf die Arbeitsvorrichtung des Fahrzeugs, also in aller Regel die Ladeschaufel eines Radladers oder die Hubgabel eines Gabelstaplers, wirkende Last eine voreingestellte Belastungsschwelle überschreitet oder überschreitend betätigt wird. Zudem kann vorgesehen sein, dass die Fahrkupplung geöffnet und die Betriebsbremse geschlossen wird, wenn ein Druck-, Kraft-, Füllstands- oder Höhensensor an der Arbeitsvorrichtung (Ladeschaufel oder Staplergabel) einer im Fahrzeug integrierten Steuerungsvorrichtung signalisiert, dass der der Arbeitsvorrichtung im Fahrbetrieb mit geschlossener Fahrkupplung zur Verfügung stehende Hydraulikdruck nicht ausreicht, um die anstehende Last zu bewältigen.

Als Signal für die Steuerungsvorrichtung kann auch die Druckerhöhung im Steuerkreis der Hydraulikpumpe von der Arbeitsvorrichtung benutzt werden.

In einer anderen Ausgestaltung des erfindungsgemäßen Verfahrens ist vorgesehen, dass die Fahrkupplung nur dann geöffnet und die Betriebsbremse vollständig angezogen wird, wenn die Fahrgeschwindigkeit Null oder annähernd Null ist. Auf diese Weise wird verhindert, dass ein plötzliches Beladen des Fahrzeugs (etwa beim Abreißen größerer Erdbrocken) nicht zu einem ebenso ruckartigen Anhalten des Fahrzeuges führt. Anstelle oder ergänzend zur Betriebsbremse kann zudem die Feststellbremse des Fahrzeugs betätigt werden.

Außerdem ist es in diesem Zusammenhang sinnvoll, wenn die Fahrgeschwindigkeit des Fahrzeuges der Steuerungsvorrichtung durch geeignete Sensoren an den Antriebswellen der Fahrzeugräder und/oder an der Getriebeeingangswelle oder der Getriebeabtriebswelle signalisiert wird.

Nach einem anderen Aspekt der Erfindung kann während oder nach dem Öffnen der Fahrkupplung durch die Steuerungsvorrichtung vorzugsweise einem Motorsteuergerät oder direkt der Leistungsregeleinheit des Motors ein Signal zur Leistungsveränderung übermittelt werden, wobei dieses Signal in der Regel eine Reduzierung und ggf. anschließend eine Erhöhung der Leistungsabgabe des Motors auslöst. Dadurch wird erreicht, dass an der Arbeitsvorrichtung (Ladeschaufel) des Fahrzeugs die durch das Wegschalten der Fahrkupplung frei werdende Leistung nicht schlagartig bereitgestellt wird.

Zudem ist es sinnvoll, wenn bei Beendigung des Arbeitsbetriebs der Arbeitsvorrichtung die Fahrkupplung wieder geschlossen und die Betriebsbremse und/oder die Feststellbremse geöffnet wird, um einen erneuten Fahrbetrieb zu ermöglichen. Bei dem Schließen oder nach dem Schließen der Fahrkupplung und dem Öffnen der Betriebsbremse und/oder der Feststellbremse gibt die Steuerungsvorrichtung dazu ein Signal zur Verminderung der Leistungsabgabe des Antriebsmotors vorzugsweise an das Motorsteuergerät ab.

Zur Durchführung der beschriebenen Steuerungsverfahren ist eine Steuerungsvorrichtung vorgesehen, die über Sensor- und Steuerleitungen mit einem Sensor zur Erfassung des an der Arbeitsvorrichtung wirkenden Drucks bzw. Kraft und/oder Füllstand und/oder Steuerdruck der Hydraulikpumpe mit wenigstens einem Sensor zur Erfassung der Fahrgeschwindigkeit sowie mit Steuerventilen in den Leitungen zur Hydraulikduckversorgung der Betätigungsmittel für die Arbeitsvorrichtung, für die Betriebs- und/oder Feststellbremse und für das Stellmittel der Fahrkupplung angeordnet sind. Diese Steuerungsvorrichtung ist dabei vorzugsweise durch eine Signalleitung signaltechnisch mit dem Motorsteuergerät oder direkt mit dem Leistungsstellglied des Antriebsmotors verbunden.

Die Erfindung wird nachfolgend anhand eines Ausführungsbeispiels sowie einer beigefügten Figur näher erläutert.

Wie der schematischen Darstellung des Radladers entnommen werden kann, umfasst dieses Arbeitsfahrzeug 1 unter anderem ein hier nicht dargestelltes Fahrgestell, in dem ein Antriebsmotor 2 integriert ist. Die Antriebswelle des Motors 2 treibt die Eingangsseite einer Fahrkupplung 3 an. Die Fahrkupplung 3 ist mit Hilfe einer Betätigungsvorrichtung 32 ein- und ausrückbar, wobei die Betätigungsvorrichtung 32 als hydraulische Kolben-Zylinder-Einheit ausgebildet sein kann.

Die Turbine, also die Ausgangsseite des Drehmomentwandlers, steht mit der Eingangswelle eines Getriebes 5 in Verbindung, von dem die Antriebswellen 6, 7 für die Antriebsräder 8, 9 des Fahrzeugs 1 abgehen.

An der Fahrzeugrückseite sind zwei weitere Fahrzeugräder 11, 12 angeordnet, die über eine Hinterachse 10 miteinander in Verbindung stehen. Zur Vereinfachung der Darstellung sind in dieser Figur lediglich an den Hinterrädern 11, 12 Betriebsbremsen 13, 14 dargestellt, die hier als Trommelbremsen ausgebildet sind.

Am vorderen Ende des Radladers 1 ist eine Ladeschaufel 21 angeordnet, die mittels hydraulischer Kolben-Zylinder-Anordnungen 19, 20 betätigbar ist.

An der rückwärtigen Seite des Antriebsmotors 2 ist außerdem eine Hydraulikpumpe 15 vorgesehen, die über eine Antriebswelle von dem Motor 2 angetrieben wird. Von dieser Hydrau-likpumpe 15 gehen Hydraulikdruckleitungen zu den Kolben-Zylinder-Anordnungen 19, 20 an der Ladeschaufel 21, zu der Betriebsbremse 13, 14 sowie zu dem Kupplungsbetätigungsvorrichtung 32 ab. In diesen Hydraulikdruckleitungen sind elektrisch betätigbare Ventile 26, 28, 29, 31 eingebunden, mit denen sich die genannten, hydraulisch zu betätigenden Vorrichtungen ansteuern lassen, wobei die Ventile 29 und 31 auch Drucksensoren für den Steuerkreis sein können.

Zur Steuerung dieser Ventile 26, 28, 29, 31 ist eine Steuerungsvorrichtung 22 vorgesehen, die über Steuerleitungen 25, 27, 30 und 36 mit den genannten Ventilen in Verbindung steht. Zudem sind Drehzahlsensoren 33, 34 an der Radantriebswelle 7 und an der Getriebeeingangswelle erkennbar, die der Steuerungsvorrichtung 22 über Sensorleitungen 37, 38 eine Information über die Antriebswellendrehzahl bzw. über die Getriebeeingangswellendrehzahl geben, die in der Steuerungsvorrichtung 22 zu der Fahrgeschwindigkeit des Fahrzeugs umgerechnet werden. Es besteht auch die Möglichkeit, einen Sensor an der Getriebeausgangswelle anzuordnen.

Erfindungsgemäß wird dieses Arbeitsfahrzeug nun so betrieben, dass dann, wenn die.Ladeschaufel 21 des Radladers wirkende Last eine voreingestellte Belastungsschwelle, also etwa eine bestimmte Gewichtslast überschreitet, die Fahrkupplung 3 von der Stellvorrichtung 32 geöffnet und die Betriebsbremse 13, 14 festgestellt wird. Dazu gibt die Steuerungsvorrichtung 22 entsprechende Steuerungsbefehle an die Hydraulikventile 26 und 28, wenn der Druck-, Kraft- und/oder Füllstandssensor 35 signalisiert, dass der anliegende Hydraulikdruck nicht ausreicht, um die an der Ladeschaufel 21 anliegende Last zu bewältigen. Dadurch wird die Turbinendrehzahl des Drehmomentwandlers von nahezu Stillstand erhöht, wodurch die Aufnahmeleistung des Drehmomentwandlers sinkt.

Um nun ein besonders komfortables Arbeitsverhalten dieses Fahrzeuges zu realisieren, ist in diesem Ausführungsbeispiel vorgesehen, dass die Steuerungsvorrichtung 22 direkt an das Leistungssteuergerät des Antriebsmotors 2 oder aber über ein Motorsteuergerät 23 an das genannte Leistungssteuergerät über die Steuerleitung 24 dann ein Signal zur Veränderung der Motorleistung abgibt, wenn aufgrund der veränderten Lastsituation ein erhöhtes oder ein reduziertes Motordrehmoment zur Erzeugung erhöhter oder reduzierten hydraulischer Betätigungsdrücke notwenig oder sinnvoll ist. Insbesondere beim Öffnen der Fahrkupplung 3 ist es zur Vermeidung einer etwa schlagartig zur Verfügung stehenden Motorleistung sinnvoll, zusammen mit dem Öffnen der Fahrkuppullung und dem Schließen der Betriebsbremse die Motorleitung herunterzufahren, wobei dies sinnvollerweise in Abhängigkeit von der mit dem Druck-, Kraft- und/oder Füllstandshöhensensor 35 sensierten Last an der Ladeschaufel 21 geschieht.

Genauso wird beim späteren Schließen der Fahrkupplung verfahren. Auch hier ist ausgehend von einer hohen Motorleistung zur Erzeugung eines hohen Arbeitsdrucks für die Ladeschaufel zunächst die Antriebsleistung des Motors herunterzufahren, um diese nach dem Schließen der Fahrkupplung ggf. wieder zu erhöhen.

Um das Öffnen der Fahrkupplung 3 und das Schließen der Betriebsbremse 13, 14 bei hoher Last an der Ladeschaufel 21 nur im Stillstand des Fahrzeuges 1 oder bei zumindest kleinen Fahrgeschwindigkeiten eintreten zu lassen, wird über die beschriebenen Drehzahlsensoren 33 oder 34 die Fahrgeschwindigkeit des Fahrzeugs 1 ermittelt.

Die beschriebenen Steuerungs- und ggf. Regelungsfunktionen lassen sich auch in vorhandene Steuerungs-und Regelungseinrichtungen eines Fahrzeugs abspeichern und dort durchführen. Dazu ist beispielsweise das Getriebesteuergerät oder das Motorsteuergerät geeignet.

### Bezugszeichen

- 1: Arbeitsfahrzeug
- 2: Brennkraftmaschine
- 3: Fahrkupplung
- 4: Hydrodynamischer Wandler
- 5: Getriebe
- 6: Antriebswelle
- 7: Antriebswelle
- 8: Antriebsrad
- 9: Antriebsrad
- 10: Hinterachse
- 11: Fahrzeugrad hinten
- 12: Fahrzeugrad hinten
- 13: Fahrbremse
- 14: Fahrbremse
- 15: Pumpe
- 16: Druckleitung
- 17: Druckleitung
- 18: Druckleitung
- 19: Kolben-Zylinder-Anordnung
- 20: Kolben-Zylinder-Anordnung
- 21: Arbeitsvorrichtung, Ladeschaufel
- 22: Steuerungsvorrichtung
- 23: Motorsteuergerät
- 24: Steuerungsleitung
- 25: Steuerungsleitung
- 26: Steuerungsventil
- 27: Steuerungsleitung
- 28: Steuerungsventil
- 29: Steuerungsventil
- 30: Steuerungsleitung
- 31: Steuerungsventil
- 32: Kupplungsstellvorrichtung
- 33: Drehzahlsensor
- 34: Drehzahlsensor
- 35: Druck-, Kraft- und/oder Füllstandshöhensensor
- 36: Steuerungsleitung
- 37: Sensorleitung
- 38: Sensorleitung
- 39: Sensorleitung

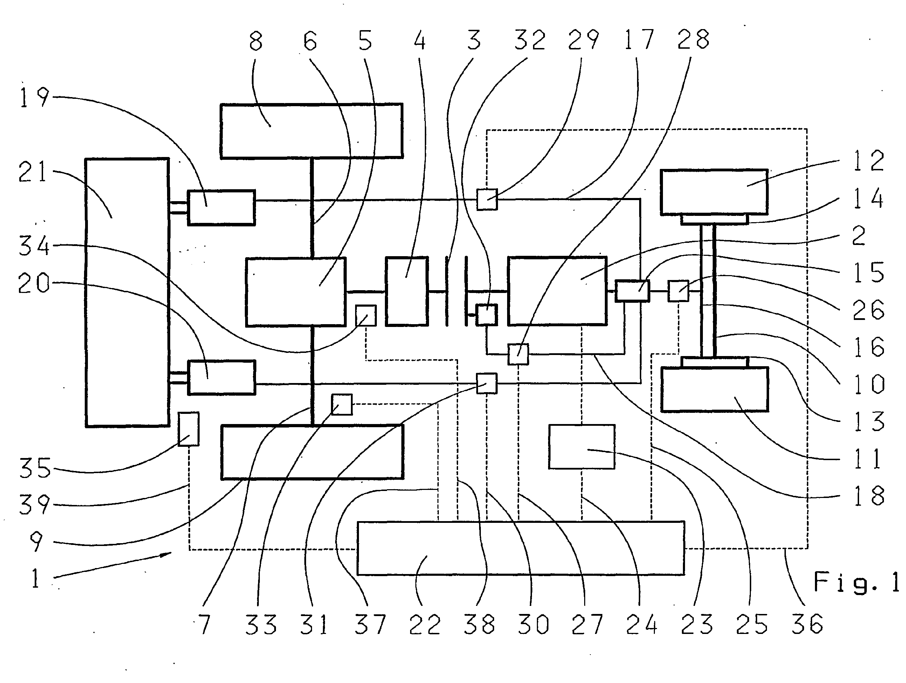

## Patentansprüche

1. Verfahren zur Steuerung von Funktionen eines Arbeitsfahrzeuges (1) mit einem Antriebsmotor (2), einer Fahrkupplung (3), einer auf die Fahrzeugräder (11, 12) wirkenden Betriebsbremse (13, 14), einer Arbeitsvorrichtung (21) und mit einer Hydraulikpumpe (15), die über Hydraulikdruckleitungen die Stellglieder an der Fahrkupplung (3), an der Betriebsbremse (13, 14) und an der Arbeitsvorrichtung (21) mit Druckmittel versorgt, und eine Steuerungsvorrichtung (22) über einen Sensor (35) die auf die Arbeitsvorrichtung (21) wirkende Last ermittelt, **dadurch gekennzeichnet, daß** die Fahrkupplung (3) automatisch geöffnet und die Betriebsbremse (13, 14) automatisch geschlossen wird, wenn die auf die Arbeitsvorrichtung (21) des Fahrzeugs wirkende Last eine voreingestellte Belastungsschwelle überschreitet oder überschreitend betätigt wird.

2. Verfahren nach Anspruch 1, **dadurch gekennzeichnet, dass** die Fahrkupplung (3) geöffnet und die Betriebsbremse (13, 14) geschlossen wird, wenn ein Druck-, Kraft- und/oder Füllstandshöhensensor (35) an der Arbeitsvorrichtung (21) einer Steuerungsvorrichtung (22) signalisiert, dass der im Fahrbetrieb für die Arbeitsvorrichtung (21) zur Verfügung stehende Hydraulikdruck nicht ausreicht, um die anstehende Last zu bewältigen.

3. Verfahren nach Anspruch 1 oder 2, **dadurch gekennzeichnet, dass** die Fahrkupplung (3) geöffnet und die Betriebsbremse (13, 14) betätigt wird, wenn die Fahrgeschwindigkeit Null oder annähernd Null ist.

4. Verfahren nach Anspruch 3, **dadurch gekennzeichnet, dass** die Fahrgeschwindigkeit des Fahrzeuges der Steuerungsvorrichtung (22) durch Sensoren (33, 34) an den Antriebs- oder Abtriebswellen (6, 7) der Fahrzeugräder (8, 9) und/oder an der Getriebeeingangswelle signalisiert wird.

5. Verfahren nach wenigstens einem der vorherigen Ansprüche, **dadurch gekennzeichnet, dass** anstelle oder zusätzlich zu der Betriebsbremse (13,14) die Feststellbremse des Fahrzeugs betätigt wird.

6. Verfahren nach wenigstens einem der vorherigen Ansprüche, **dadurch gekennzeichnet, dass** während oder nach dem Öffnen der Fahrkupplung (3) die Steuerungsvorrichtung (22) vorzugsweise einem Motorsteuergerät (23) oder direkt an die Leistungsregelungsvorrichtung des Antriebsmotors (2) ein Signal zur Leistungsveränderung übermittelt.

7. Verfahren nach Anspruch 6, **dadurch gekennzeichnet, dass** das Signal an das Motorsteuergerät (23) eine Reduzierung der Leistungsabgabe des Motors (2) auslöst.

8. Verfahren nach Anspruch 1, **dadurch gekennzeichnet, dass** bei Beendigung des Arbeitsbetriebs der Arbeitsvorrichtung (21) die Fahrkupplung wieder geschlossen und die Betriebsbremse (13, 14) und/oder die Feststellbremse geöffnet wird.

9. Verfahren nach Anspruch 8, **dadurch gekennzeichnet, dass** bei dem Schließen oder nach dem Schließen der Fahrkupplung (3) und dem Öffnen der Betriebsbremse (13, 14) und/oder der Feststellbremse die Steuervorrichtung (22) ein Signal zur Veränderung der Leistungsabgabe des Antriebsmotors (2) vorzugsweise an das Motorsteuergerät (23) abgibt.

10. Vorrichtung zur Steuerung von Funktionen eines Arbeitsfahrzeuges (1) mit einem Antriebsmotor (2), einer Fahrkupplung (3), einer auf die Fahrzeugräder (11, 12) wirkenden Betriebsbremse (13, 14), einer Arbeitsvorrichtung (21) und mit einer Hydraulikpumpe (15), die über Hydraulikdruckleitungen die Stellglieder an der Fahrkupplung (3), an der Betriebsbremse (13, 14) und an der Arbeitsvorrichtung (21) mit Druckmittel versorgt, **dadurch gekennzeichnet, dass** eine Steuerungsvorrichtung (22) über einen Sensor (35) die auf die Arbeitsvorrichtung (21) wirkende Last ermittelt und die Fahrkupplung (3) automatisch geöffnet und die Betriebsbremse (13, 14) automatisch geschlossen wird, wenn die auf die Arbeitsvorrichtung (21) des Fahrzeugs wirkende Last eine voreingestellte Belastungsschwelle überschreitet oder überschreitend betätigt wird.

11. Vorrichtung nach Anspruch 10, **dadurch gekennzeichnet, dass** die Steuerungsvorrichtung (22) durch eine Steuerleitung (24) über ein Motorsteuergerät (23) oder direkt mit der Leistungsregelungsvorrichtüng des Antriebsmotors (2) verbunden ist.

## Claims

1. Method for controlling functions of a working vehicle (1) comprising a driving engine (2), a driving clutch (3), a service brake (13, 14) acting on the vehicle wheels (11, 12), a working device (21) and a hydraulic pump (15) which supplies the actuators on the driving clutch (3), on the service brake (13, 14) and on the working device (21) with pressure medium via hydraulic pressure lines, and a control device (22) determines the load acting on the working device (21) via a sensor (35), **characterised in that** the driving clutch (3) is automatically opened and the service brake (13, 14) is automatically closed when the load acting on the working device (21) of the vehicle exceeds or is actuated to exceed a predetermined load threshold.

2. Method according to claim 1, **characterised in that** the driving clutch (3) is opened and the service brake (13, 14) is closed when a pressure, force and/or filling level height sensor (35) on the working device (21) signals to a control device (22) that the hydraulic pressure available for the working device (21) in the driving mode is not sufficient to manage the present load.

3. Method according to claim 1 or 2, **characterised in that** the driving clutch (3) is opened and the service brake (13, 14) is actuated when the driving speed is zero or approximately zero.

4. Method according to claim 3, **characterised in that** the driving speed of the vehicle is signalled to the control device (22) by sensors (33, 34) on the drive or output shafts (6, 7) of the vehicle wheels (8, 9) and/or on the transmission input shaft.

5. Method according to at least one of the preceding claims, **characterised in that** the parking brake of the vehicle is actuated instead of or in addition to the service brake (13, 14).

6. Method according to at least one of the preceding claims, **characterised in that**, during or after the opening of the driving clutch (3), the control device (22) transmits preferably to an engine control unit (23) or directly to the power regulating device of the driving engine (2) a signal to change power.

7. Method according to claim 6, **characterised in that** the signal to the engine control unit (23) triggers a reduction in the power output of the engine (2).

8. Method according to claim 1, **characterised in that**, at the end of working operation of the working device (21), the driving clutch is closed again and the service brake (13, 14) and/or the parking brake is opened.

9. Method according to claim 8, **characterised in that**, during the closing or after the closing of the driving clutch (3) and the opening of the service brake (13, 14) and/or of the parking brake, the control device (22) outputs preferably to the engine control unit (23) a signal to change the power output of the driving engine (2).

10. Device for controlling functions of a working vehicle (1) comprising a driving engine (2), a driving clutch (3), a service brake (13, 14) acting on the vehicle wheels (11, 12), a working device (21) and a hydraulic pump (15) which supplies the actuators on the driving clutch (3), on the service brake (13, 14) and on the working device (21) with pressure medium via hydraulic pressure lines, **characterised in that** a control device (22) determines the load acting on the working device (21) via a sensor (35), and the driving clutch (3) is automatically opened and the service brake (13, 14) is automatically closed when the load acting on the working device (21) of the vehicle exceeds or is actuated to exceed a predetermined load threshold.

11. Device according to claim 10, **characterised in that** the control device (22) is connected by a control line (24) to the power regulation device of the driving engine (2) via an engine control unit (23) or directly.

## Revendications

1. Procédé de commande de fonctions d'un véhicule de chantier (1) comprenant un moteur d'entraînement (2), un embrayage de propulsion (3), un frein de service (13, 14) qui agit sur les roues (11, 12) du véhicule, un dispositif de travail (21) et une pompe hydraulique (15) qui alimente les organes de réglage prévus sur l'embrayage de propulsion (3), sur le frein de service (13. 14) et sur le dispositif de travail (21) en milieu de pression, et un dispositif de commande (22) qui détermine la charge agissant sur le dispositif de travail (21) au moyen d'un capteur (35), **caractérisé en ce que** l'embrayage de propulsion (3) est automatiquement ouvert et le frein de service (13, 14) automatiquement fermé lorsque la charge agissant sur le dispositif de travail (21) du véhicule dépasse un seuil de charge pré-établi, ou est actionnée en dépassement.

2. Procédé selon la revendication 1, **caractérisé en ce que** l'embrayage de propulsion (3) est ouvert et le frein de service (13, 14) fermé lorsqu'un capteur de pression, de force et/ou de niveau de remplissage (35) prévu sur le dispositif de travail (21) signale à un dispositif de commande (22) que la pression hydraulique qui est disponible pour le dispositif de travail (21) pendant la marche ne suffit pas pour maîtriser la charge qui est appliquée.

3. Procédé selon la revendication 1 ou 2, **caractérisé en ce que** l'embrayage de propulsion (3) est ouvert et le frein de service (13, 14) actionné lorsque la vitesse de marche est nulle ou à peu près nulle.

4. Procédé selon la revendication 3, **caractérisé en ce que** la vitesse de marche du véhicule est signalée au dispositif de commande (22) par des capteurs (33, 34) prévus sur les arbres d'entrée et de sortie (6, 7) des roues (8, 9) du véhicule et/ou sur l'arbre d'entrée de la transmission.

5. Procédé selon au moins l'une des revendications précédentes, **caractérisé en ce que**, en remplacement ou en supplément du frein de service (13, 14), le frein de stationnement du véhicule est actionné.

6. Procédé selon au moins I une des revendications précédentes, **caractérisé en ce que**, pendant ou après l'ouverture de l'embrayage de propulsion (3), le dispositif de commande (22) transmet un signal pour la modification de la puissance de préférence à un appareil de commande du moteur (23), ou directement au dispositif de régulation de puissance du moteur d'entraînement (2).

7. Procédé selon la revendication 6, **caractérisé en ce que** le signal transmis à l'appareil de commande du moteur (23) déclenche une réduction de la sortie de puissance du moteur (2).

8. Procédé selon la revendication 1, **caractérisé en ce que**, lors de la fin du service de travail du dispositif de travail (21), l'embrayage de propulsion est de nouveau fermé et le frein de service (13, 14) et/ou le frein de stationnement est ou sont ouverts.

9. Procédé selon la revendication 8, **caractérisé en ce que**, lors de la fermeture ou après la fermeture de l'embrayage de propulsion (3) et lors de l'ouverture ou après l'ouverture du frein de service (13, 14) et/ou du frein de stationnement, le dispositif de commande (22) transmet un signal pour la modification de la sortie de puissance du moteur d'entraînement (2), de préférence à l'appareil de commande du moteur (23).

10. Dispositif pour la commande de fonctions d'un véhicule de chantier (1) comprenant un moteur d'entraînement (2), un embrayage de propulsion (3), un frein de service (13, 14) qui agit sur les roues (11, 12) du véhicule, un dispositif de travail (21) et une pompe hydraulique (15) qui alimente les organes de réglage prévus sur l'embrayage de propulsion (3), sur le frein de service (13, 14) et sur le dispositif de travail (21) en milieu de pression, **caractérisé en qu'**un dispositif de commande (22) détermine par l'intermédiaire d'un capteur (35) la charge qui agit sur le dispositif de travail (21) et l'embrayage de propulsion (3) est automatiquement ouvert et le frein de service (13, 14) automatiquement fermé lorsque la charge agissant sur le dispositif de travail (21) du véhicule dépasse un seuil de charge pré-établi ou est actionné en dépassement.

11. Dispositif selon la revendication 10, **caractérisé en ce que** le dispositif de travail (22) est relié par une ligne de commande (24), par l'intermédiaire d'un appareil de commande de moteur (23), ou directement, au dispositif de régulation de puissance du moteur de propulsion (2).
